# EUROPEAN PATENT APPLICATION

(11) **EP 4 580 095 A1**
(43) Date of publication of application: **02.07.2025**
(21) Application number: 24810206.3
(22) Date of filing: 08.05.2024
(51) Int. Cl.: H04L 1/00

(54) **AUXILIARY INFORMATION REPORTING METHOD AND SYSTEM, TERMINAL, AND COMPUTER READABLE STORAGE MEDIUM**

(30) Priority: 22.05.2023 CN 202310577810
(71) Applicant: China Telecom Corporation Limited Beijing Research Institute, Beijing 102200 (CN); China Telecom Corporation Limited, Beijing 100033 (CN)
(72) Inventor: GU, Yi, Beijing 100033 (CN); YIN, Hang, Beijing 100033 (CN); LI, Nanxi, Beijing 100033 (CN); ZHU, Jianchi, Beijing 100033 (CN); SHE, Xiaoming, Beijing 100033 (CN)
(74) Representative: Ipsilon NNY
(86) International application number: PCT/CN2024/091593
(87) International publication number: WO 2024/239959

(57) **Abstract**

The present invention relates to an auxiliary information reporting method and system, a terminal, and a computer readable storage medium. The auxiliary information reporting method comprises: reporting auxiliary information to a network side device on the basis of a media access control-control element (MAC-CE), wherein the auxiliary information is used as reference for the network side device to perform uplink waveform switching, and the auxiliary information includes power related information. According to the terminal in the present invention, terminal auxiliary information can be reported to a network in real time, so that a network device correctly schedules the waveform of a PUSCH, thereby ensuring the uplink transmission performance, and improving the network coverage capability.

## Description

### CROSS-REFERENCE TO RELATED APPLICATIONS

The present disclosure is based on and claims priority to the China Patent Application No. CN202310577810.2 filed on May 22, 2023, the disclosure of which is incorporated by reference herein in its entirety.

### TECHNICAL FIELD

The present disclosure relates to the field of information communication, and in particular, to an assistant information reporting method and system, a UE (user equipment) and a computer-readable storage medium.

### BACKGROUND

Uplink coverage of the 5G network is a big bottleneck of network coverage, and as the difference of coverage capacity between an uplink channel and a downlink channel is several tens of dB, the uplink channel needs to be further enhanced. Dynamic waveform switching is a method for uplink enhancement, which can guarantee that a PUSCH (Physical Uplink Shared Channel) transmission is at a reasonable rate and a code rate by scheduling waveforms of the PUSCH in real time, thereby improving the transmission performance of the PUSCH.

### SUMMARY

According to an aspect of the present disclosure, there is provided an assistant information reporting method, comprising: reporting assistant information to network equipment based on a Media Access Control-Control Element (MAC-CE), wherein the assistant information is used as a reference for the network equipment to perform uplink waveform switching, and the assistant information comprises power related information.

In some embodiments of the present disclosure, the reporting assistant information to network equipment based on a Media Access Control-Control Element (MAC-CE), comprises: determining an assistant information trigger mechanism; and reporting the assistant information based on the MAC-CE according to the assistant information trigger mechanism.

In some embodiments of the present disclosure, the reporting the assistant information based on the MAC-CE according to the assistant information trigger mechanism, comprises: simultaneously triggering reporting of the assistant information and Power Headroom Report (PHR) information, according to a PHR information trigger mechanism.

In some embodiments of the present disclosure, the reporting the assistant information based on the MAC-CE according to the assistant information trigger mechanism, comprises: triggering the reporting of the assistant information according to a first assistant information trigger mechanism, wherein the first assistant information trigger mechanism comprises a Power Headroom Report (PHR) information trigger mechanism and an independent assistant information trigger mechanism, and the independent assistant information trigger mechanism and the PHR information trigger mechanism are independent of each other.

In some embodiments of the present disclosure, the reporting the assistant information based on the MAC-CE according to the assistant information trigger mechanism, comprises: triggering the reporting of the assistant information according to an independent assistant information trigger mechanism, wherein the independent assistant information trigger mechanism and a Power Headroom Report (PHR) information trigger mechanism are independent of each other.

In some embodiments of the present disclosure, the reporting assistant information based on a Media Access Control-Control Element (MAC-CE), comprises: reporting the assistant information by adopting an MAC-CE entry, wherein the MAC-CE entry is a single entry MAC-CE or a multiple entry MAC-CE.

In some embodiments of the present disclosure, the reporting the assistant information by adopting an MAC-CE entry, comprises: modifying a predetermined field of a first MAC-CE entry; using the predetermined field to indicate the first MAC-CE entry to be used for the reporting of the assistant information or Power Headroom Report (PHR) information; and reporting the assistant information by using the first MAC-CE entry.

In some embodiments of the present disclosure, the predetermined field is a reserved Field R or a logical channel identification.

In some embodiments of the present disclosure, the reporting the assistant information by using an MAC-CE entry, comprises: adding an entry size and extending an indication field based on the first MAC-CE entry, and taking a new MAC-CE entry as a second MAC-CE entry; and reporting the assistant information by adopting the second MAC-CE entry.

In some embodiments of the present disclosure, the extending an indication field comprises: extending a first indication field, wherein the first indication field is used to indicate whether there is a reporting of the assistant information in each serving cell.

In some embodiments of the present disclosure, the extending an indication field comprises: adding a second indication field, wherein the second indication field is used to indicate a reporting of reference assistant information or actual assistant information.

In some embodiments of the present disclosure, the extending a first indication field comprises: extending an indication field Ci as the first indication field, wherein the indication field Ci is used to indicate whether the each serving cell simultaneously reports the assistant information and Power Headroom Report (PHR) information.

In some embodiments of the present disclosure, the extending the first indication field comprises:
adding an indication field as the first indication field, wherein the newly added indication field is used to indicate whether the each serving cell reports the assistant information.

In some embodiments of the present disclosure, the adding an entry size comprises: respectively placing the assistant information of the each serving cell behind carrier power information of the each serving cell.

In some embodiments of the present disclosure, the adding an entry size comprises: placing all the assistant information behind all carrier power information.

In some embodiments of the present disclosure, in a case where a carrier waveform of each serving cell comprises various waveforms, the reporting the assistant information by adopting a second MAC-CE entry, comprises: reporting the assistant information of the various waveforms in a unified manner or selecting the assistant information of one of the various waveforms to report.

In some embodiments of the present disclosure, the respectively placing the assistant information of the each serving cell behind carrier power information of the each serving cell, comprises: respectively placing the assistant information of various waveforms in the each serving cell behind the carrier power information of the each serving cell.

In some embodiments of the present disclosure, the placing all the assistant information behind all carrier power information, comprises: centralizing the assistant information of various waveforms in all serving cells according to serving cell identifications, and then sequencing the assistant information; or, centralizing the assistant information of various waveforms in all the serving cells according to waveform types, and then sequencing the assistant information.

In some embodiments of the present disclosure, the reporting the assistant information by adopting an MAC-CE entry, comprises: reporting the assistant information by adopting a third MAC-CE entry, wherein the third MAC-CE entry is only used to report the assistant information.

In some embodiments of the present disclosure, the assistant information is waveform switching assistant information; the assistant information further comprises at least one of modulation and coding scheme level information or a frequency domain resource allocation type, and the power related information further comprises at least one of Power Headroom Report (PHR) information, a maximum transmission power, a power variation, a power difference, a power value or a power compression factor.

In some embodiments of the present disclosure, the assistant information comprises at least one of real PHR information or reference PHR information after waveform switching.

In some embodiments of the present disclosure, the assistant information comprises real PHR information and/or reference PHR information before waveform switching.

In some embodiments of the present disclosure, the assistant information comprises at least one of real PHR information or reference PHR information before waveform switching.

In some embodiments of the present disclosure, the reporting assistant information to network equipment based on a Media Access Control-Control Element (MAC-CE), comprises: reporting the assistant information based on the MAC-CE, and triggering a waveform switching behavior of the network side.

In some embodiments of the present disclosure, the reporting assistant information to network equipment based on a Media Access Control-Control Element (MAC-CE), comprises: triggering the reporting of the assistant information based on the MAC-CE after the waveform switching behavior.

According to another aspect of the present disclosure, there is provided a user equipment, comprising: an assistant information reporting module, configured to report assistant information to network equipment based on a Media Access Control-Control Element (MAC-CE), wherein the assistant information is used the assistant information is used as a reference for the network equipment to perform uplink waveform switching, and the assistant information comprises power related information.

According to another aspect of the present disclosure, there is provided a user equipment, comprising: a memory configured to store instructions; and a processor configured to execute the instructions, to cause the user equipment to implement the assistant information reporting method according to any one of the above embodiments.

According to another aspect of the present disclosure, there is provided an assistant information reporting system, comprising: a user equipment configured to report assistant information to network equipment based on a Media Access Control-Control Element (MAC-CE), wherein the assistant information comprises power related information, and the user equipment is the user equipment according to any one of the above embodiments; and the network equipment configured to schedule uplink waveform switching according to the assistant information.

According to another aspect of the present disclosure, there is provided a computer-readable storage medium, wherein the computer-readable storage medium stores computer instructions which when executed by a processor, implement the assistant information reporting method according to any one of the above embodiments.

According to another aspect of the present disclosure, there is provided a computer program, comprising: instructions which when executed by a processor, cause the processor to perform the assistant information reporting method according to any one of the above embodiments.

### BRIEF DESCRIPTION OF THE DRAWINGS

In order to more clearly illustrate embodiments of the present disclosure or technical solutions in the prior art, the drawings used in the description of the embodiments or the prior art will be briefly described below, and it is obvious that the drawings in the following description are only some embodiments of the present disclosure, and for those skilled in the art, other drawings can be obtained from the drawings without creative efforts.
Fig. 1 is a schematic diagram of some embodiments of an assistant information reporting method according to the present disclosure.
Fig. 2 is a schematic diagram of other embodiments of an assistant information reporting method according to the present disclosure.
Fig. 3 is a schematic diagram of some embodiments of a first MAC-CE structure of assistant information according to the present disclosure.
Fig. 4 is a diagram of an MAC-CE entry defining a new LCID table for distinguishing assistant information, in some embodiments of the present disclosure.
Fig. 5 is a schematic diagram of some embodiments of a second MAC-CE structure of assistant information according to the present disclosure.
Fig. 6 is a schematic diagram of other embodiments of a second MAC-CE structure of assistant information according to the present disclosure.
Fig. 7 is a schematic diagram of still other embodiments of a second MAC-CE structure of assistant information according to the present disclosure.
Fig. 8 is a schematic diagram of still other embodiments of a second MAC-CE structure of assistant information according to the present disclosure.
Fig. 9 is a schematic diagram of still other embodiments of a second MAC-CE structure of assistant information according to the present disclosure.
Fig. 10 is a schematic diagram of still other embodiments of a second MAC-CE structure of assistant information according to the present disclosure.
Fig. 11 is a schematic diagram of some embodiments of a third MAC-CE structure of assistant information according to the present disclosure.
Fig. 12 is a schematic diagram of some embodiments of a user equipment according to the present disclosure.
Fig. 13 is a schematic structural diagram of other embodiments of a user equipment according to the present disclosure.
Fig. 14 is a schematic structural diagram of some embodiments of an assistant information reporting system according to the present disclosure.

### DETAILED DESCRIPTION

The technical solutions in the embodiments of the present disclosure will be described clearly and completely with reference to the drawings in the embodiments of the present disclosure, and it is obvious that the embodiments described are only some embodiments of the present disclosure, rather than all embodiments. The following description of at least one exemplary embodiment is merely illustrative in nature and is in no way intended to limit the disclosure, its application, or use. All other embodiments, which can be derived by a person skilled in the art from the embodiments disclosed herein without making any creative effort, shall fall within the protection scope of the present disclosure.

The relative arrangement of parts and steps, numerical expressions and numerical values set forth in these embodiments do not limit the scope of the present disclosure unless specifically stated otherwise.

Meanwhile, it should be understood that the sizes of the respective portions shown in the drawings are not drawn in an actual proportional relationship for the convenience of description.

Techniques, methods, and devices known to one of ordinary skill in the relevant art may not be discussed in detail but are intended to be part of the specification where appropriate.

In all examples shown and discussed herein, any particular value should be construed as exemplary only and not as limiting. Thus, other examples of the exemplary embodiments may have different values.

It should be noted that: like reference numbers and letters refer to like items in the following figures, and thus, once an item is defined in one figure, it need not be discussed further in subsequent figures.

The inventors found through research that: waveform switching can be indicated by 1bit information or multiplexing the existing indication field, which seems to be simple and crude, but actually brings a great influence. One of the technical problems is that different waveforms before and after the switching cause different power backoff, so the network needs to know the transmission power of the PUSCH in real time, otherwise the switching may be scheduled according to wrong information, which will affect the performance.

In view of at least one of the above technical problems, the present disclosure provides an assistant information reporting method and system, a user equipment and a computer-readable storage medium, wherein the user equipment can report the user equipment assistant information in real time. The present disclosure is illustrated by the following specific embodiments.

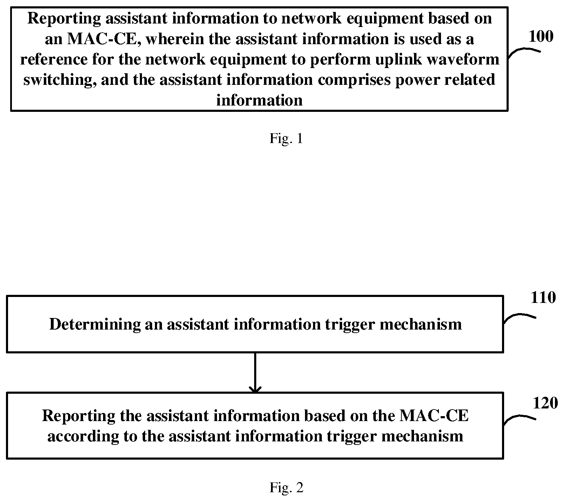

Fig. 1 is a schematic diagram of some embodiments of an assistant information reporting method according to the present disclosure. Preferably, this embodiment may be executed by a user equipment of the present disclosure. The method comprises step 100.

In the step 100, AI (assistant information) is reported to a network equipment(network side equipment) based on an MAC-CE (Medium Access Control-Control Element), wherein the assistant information is used as a reference for the network equipment to perform uplink waveform switching, and the assistant information comprises power related information.

In some embodiments of the present disclosure, the assistant information is waveform switching assistant information.

In some embodiments of the present disclosure, the assistant information is dynamic waveform switching assistant information.

In some embodiments of the present disclosure, the step 100 may comprise: reporting the assistant information based on the MAC-CE, and triggering a waveform switching behavior of the network side.

In other embodiments of the present disclosure, the step 100 may comprise: triggering the reporting of the assistant information based on the MAC-CE after the waveform switching behavior.

In some embodiments of the present disclosure, for the dynamic waveform switching, a waveform switching is already supported in the network in a related art, that is, in a random access procedure, a waveform of MSG3 (message 3 of the random access procedure) scheduled through DCI (Downlink Control Information) 0-0 may be different from a waveform of an ordinary PUSCH scheduled through DCI 0-1, therefore the waveform switching is implemented. However, the above waveform switching belongs to a waveform switching performed by scheduling different DCIs, is long in time delay and very fixed in mechanism, and cannot meet the requirement of a dynamic flexible waveform switching mechanism, so that a separate mechanism is designed to support the dynamic waveform switching in the present disclosure.

The inventors found through research that: in the waveform switching process, because DFT (Discrete Fourier Transform) only supports a single-stream, continuous frequency domain resource allocation, and is limited by the DFT implementation technology, it is necessary to allocate the number of frequency domain resource blocks with multiples of 2, 3 and 5. Therefore, in actual switching, once it is switched from a CP (Cyclic Prefix) waveform to a DFT waveform, various problems such as inconsistent resource allocation type and inappropriate power transmission may occur. Although some of the above problems can be solved through reasonable configuration and scheduling, the network side cannot perform real-time measurement and change for related problems such as power value. Therefore, in addition to adding the switching indication, in the present disclosure, the UE needs to provide the network equipment with corresponding assistant information in advance, to help the network equipment to schedule the uplink dynamic waveform switching with correct transmission parameters.

In some embodiments of the present disclosure, UE assistant information may comprise FDRA (Frequency Domain Resource Allocation) type, MCS (Modulation and Coding Scheme) level information, and power related information such as PHR (Power Headroom Report), PCmax (maximum transmission power) and a combination thereof.

In some embodiments of the present disclosure, the assistant information comprises at least one of the MCS level information, the FDRA type, or the power related information.

In some embodiments of the present disclosure, the power related information comprises at least one of Power Headroom Report (PHR) information, PCmax, a power variation, a power difference, a power value, or a power compression factor, wherein the power difference is a power difference between the assistant information and the PHR.

In some embodiments of the present disclosure, the power difference may be a difference of the PHR with respect to the assistant information; or may be a power difference between two different waveforms; alternatively, a fixed power difference (offset) may be determined from one waveform, and a power value of the other waveform may be considered as a sum or a difference of the waveform and the fixed power difference.

In some embodiments of the present disclosure, the assistant information comprises at least one of real PHR information or reference PHR information after waveform switching.

In some embodiments of the present disclosure, the assistant information comprises at least one of real PHR information or reference PHR information before waveform switching.

For example: in a case where it is not needed to report PHR before waveform switching, but the base station needs to make a waveform switching decision, the user equipment will be triggered to report one piece of assistant information. In the case, the assistant information reported by the user equipment comprises at least one of a real PHR of the current waveform or a reference PHR of the waveform to be switched.

In some embodiments of the present disclosure, the assistant information is reference PHR information of a waveform different from a current waveform after switching.

Since the real-time power information can only be reported in real time by the UE, in order to enable the network equipment to master state information such as the power of the UE in real time, the present disclosure enables the UE report the assistant information, wherein the assistant information comprises PHR, PCmax or a power difference between the assistant information and the PHR, so that the network can correctly schedule the waveform of the PUSCH, guaranteeing the uplink transmission performance, and improving the network coverage capability.

The inventors found through research that: the uplink dynamic waveform switching of the UE enables the network equipment to perform uplink transmission by using an optimal waveform, and can improve the uplink transmission rate in real time in a case where the network quality becomes better, or can better guarantee the transmission quality in a case where the network quality is poor, so that feasibility is widely discussed in R18 release. The indication of the dynamic waveform switching is a simpler feature, such as adding a 1bit indication information. However, the process of switching from DFT to CP or from CP to DFT may involve that MCS needs to be modified, the type of FDRA needs to be changed, the power control of the two waveforms is different, and the power difference before and after the switching needs to be known. Therefore, in the present disclosure, the UE reports some assistant information, as a reference for the network equipment to schedule the dynamic waveform switching, so as to make the most reasonable switching indication.

In the waveform switching process, the reporting of the PHR and the reporting of the assistant information may be involved, and the assistant information may comprise information such as the PHR, PCmax and power difference, and is generally a waveform power reference after switching.

In some embodiments of the present disclosure, the assistant information is generally a power reference of another waveform different from a current waveform before or after the waveform switching.

In other embodiments of the present disclosure, the assistant information may also be a waveform condition of the current waveform before or after the waveform switching.

In order to provide reasonable reporting mode and structure of the assistant information and to be distinguished from PHR reporting to avoid confusion, in the present disclosure, both the assistant information and the PHR may use the same trigger mechanism but different reporting formats.

Therefore, the present disclosure designs a triggering process and reporting format for the MAC-CE-based trigger mechanism that are different from those of the PHR, and refines the reporting process, so as to ensure reasonable and correct reporting of the assistant information and not to mutually affect the PHR reporting process.

The present disclosure is illustrated below by specific embodiments.

Fig. 2 is a schematic diagram of other embodiments of an assistant information reporting method according to the present disclosure. Preferably, this embodiment can be executed by the user equipment of the present disclosure. The method (e.g., the step in the embodiment of Fig. 1) may comprise at least one of steps 110 and 120.

In the step 110, an assistant information trigger mechanism is determined.

In some embodiments of the present disclosure, the assistant information trigger mechanism may comprise at least one of a Power Headroom Report (PHR) information trigger mechanism, a first assistant information trigger mechanism, or an independent assistant information trigger mechanism.

In the step 120, the assistant information is reported based on the MAC-CE according to the assistant information trigger mechanism.

In some embodiments of the present disclosure, the step 120 may comprise at least one of steps 121 to 123.

In the step 121, the assistant information is triggered simultaneously with PHR, i.e., the assistant information is triggered simultaneously with the PHR by the UE.

In some embodiments of the present disclosure, the step 121 may comprise: simultaneously triggering the reporting of the assistant information and Power Headroom Report (PHR) information, according to a PHR information trigger mechanism.

In some embodiments of the present disclosure, in the step 121, the assistant information uses the legacy trigger event of the PHR, so the assistant information will be triggered at the same time.

In some embodiments of the present disclosure, the PHR is triggered mainly by at least one of the following events.
1. In a case where there is an uplink resource for a new transmission on the MAC, Phr-ProhibitTimer times out or has timed out, and if a change in a path loss of at least one activated cell of any MAC entry, compared with a path loss of the at least one activated cell in case where a previous PHR is transmitted on the MAC, is greater than PHR-Tx-PowerFactorChange.
   In some embodiments of the present disclosure, the parameter PHR-Tx-PowerFactorChange is used as a path loss reference. The evaluation of the path loss change of a cell is to compare the following two path loss values without considering the change of the path loss reference between two times: the path loss measured at the current time under the current path loss reference configuration; and the path loss measured under the path loss reference configuration at the time of the previous PHR transmission.
2. The phr-PeriodicTimer is timeout and triggers the periodic PHR.
3. The PHR function, not comprising deactivated configurations, is configured or reconfigured on the upper layer.
4. Activation of serving cell (SCell) is configured with uplink in any one MAC entity.
5. One SCG is activated.
6. Addition of PScell (unless SCG is deactivated).
7. In a case where there is an uplink resource for new transmission on the MAC, Phr-ProhibitTimer times out or has timed out, for any activated serving cell configured with an uplink on any MAC, the PHR is triggered in the case where the following conditions are met: there is an uplink resource for transmission or a PUCCH transmission in the activated serving cell, and a change in a power backoff of the cell, compared with a power backoff value reported by the PHR in case where there is PUSCH or PUCCH transmission in the MAC entry, is larger than phr-Tx-PowerFactorChange.
8. Any one MAC entry is configured with an uplink SCell, which activates the switching process of BWP from a sleep state to a non-sleep state.
9. mpe-Reporting-FR2 is configured, while mpe-ProhibitTimer is not started. After the last PHR transmission of the MAC-CE entry, the value of measured P-MPR for meeting FR2 MPE requirements is equal to or greater than a MPE-Threshold of at least one activated FR2 serving cell. Or, after the last PHR transmission, since the value of the measured P-MPR meeting the MPE requirements is equal to or greater than the mpe-Threshold, the entry changes a value Db greater than the phr-Tx-PowerFactorChange, to act on the at least one activated FR2 serving cell.

In step 122, some mechanisms use PHR trigger(legacy trigger event), and some mechanisms use UE independent assistant information trigger (new trigger event).

In some embodiments of the present disclosure, the step 122 may comprise: triggering the reporting of the assistant information according to a first assistant information trigger mechanism, wherein the first assistant information trigger mechanism comprises a Power Headroom Report (PHR) information trigger mechanism and an independent assistant information trigger mechanism, and the independent assistant information trigger mechanism and the PHR information trigger mechanism are independent of each other. For example: in the case where the PHR information trigger mechanism comprises m trigger conditions and the independent assistant information trigger mechanism comprises n trigger conditions, the first assistant information trigger mechanism comprises m+n trigger conditions, where m and n are natural numbers greater than 0.

In some embodiments of the present disclosure, a part of the assistant information in the step 122 is a legacy PHR trigger mechanism, and a part of the assistant information in the step 122 may set up a trigger condition (mechanism) for the assistant information independently.

In some embodiments of the present disclosure, the triggering of the assistant information of the UE is subsequent to the triggering of the PHR.

In some embodiments of the present disclosure, one PHR is generally reported after waveform switching; since the waveform is changed, and the assistant information is reported to provide power information of another waveform for a base station to perform switching reference and power management, the assistant information must take a time between a PHR trigger time and a DCI instructing to report assistant information PUSCH as a reference, and in a multi-carrier scenario, it is determined whether the assistant information of different carriers reports a real PHR or a reference PHR, according to whether the triggering times of two pieces of assistant information are in the interval.

In some embodiments of the present disclosure, the assistant information of the UE is triggered before the triggering of the PHR. For example: before the waveform switching, the assistant information is reported for the base station to refer to the power state of another waveform different from a current waveform.

In the step 123, a completely new UE assistant information trigger condition (new trigger event) is used, which is independent of the PHR trigger mechanism.

In some embodiments of the present disclosure, the step 123 may comprise: triggering the reporting of the assistant information according to an independent assistant information trigger mechanism, wherein the independent assistant information trigger mechanism and a Power Headroom Report (PHR) information trigger mechanism are independent of each other.

In some embodiments of the present disclosure, the independent assistant information trigger mechanism may comprise: being triggered by waveform switching indication information or being triggered by waveform switching behavior.

In some embodiments of the present disclosure, the independent assistant information trigger mechanism may comprise: indicating the reporting trigger of the assistant information through DCI and/or reported content and/or reported type and/or reported sequence or priority, and indicating the rest in a pre-configuration or pre-defined manner.

In some embodiments of the present disclosure, the independent assistant information trigger mechanism may comprise: an explicit trigger or an implicit trigger.

In some embodiments of the present disclosure, the explicit trigger may comprise at least one of the following steps: triggering the reporting of the assistant information by adding an indication field on the DCI; triggering the reporting of the assistant information by multiplexing the existing indication field on the DCI; or adding a new format for indication.

In some embodiments of the present disclosure, the implicit trigger may comprise: triggering the reporting of the assistant information through joint indication by one or a combination of the following steps: the MCS reaching a first threshold; making a waveform switching indication; FDRA indicating type 1; a rank (channel rank) number of a TPMI (Transmitted Precoding Matrix Indicator) reaching a second threshold; TPC (Transmit Power Control) reaching a third threshold.

The present disclosure provides a method of reporting waveform switching assistant information based on a media control access unit. The present disclosure belongs to the field of wireless communications and UEs. The present disclosure may be used to help the network for better dynamic waveform switching.

In some embodiments of the present disclosure, the step of reporting assistant information based on a Medium Access Control -Control Element MAC-CE (e.g., the step 100 in the embodiment of Fig. 1 or the step 120 in the embodiment of Fig. 2) may comprise: reporting the assistant information by adopting an MAC-CE entry, wherein the MAC-CE entry is a single entry MAC-CE or a multiple entry MAC-CE.

In some embodiments of the present disclosure, the MAC-CE entry may be at least one of a first MAC-CE entry, a second MAC-CE entry and a third MAC-CE entry, wherein the first MAC-CE entry is an MAC-CE entry of the related art (legacy MAC-CE entry); the second MAC-CE entry and the third MAC-CE entry are new MAC-CE entries.

The three MAC-CE entries are explained below with reference to specific embodiments.

### First MAC-CE entry:

In some embodiments of the present disclosure, the reporting the assistant information by adopting an MAC-CE entry may comprise: reporting the assistant information by adopting a first MAC-CE entry, wherein the first MAC-CE entry is an MAC-CE entry of the related art, and the first MAC-CE entry is suitable for a single entry or multiple entry MAC-CE.

In some embodiments of the present disclosure, the reporting the assistant information by adopting a first MAC-CE entry, comprises: modifying a predetermined field of the first MAC-CE entry; using the predetermined field to indicate the first MAC-CE entry for reporting the assistant information or PHR information; and reporting the assistant information by using the first MAC-CE entry.

In some embodiments of the present disclosure, the predetermined field is a reserved Field R or LCID (Logical Channel Identification).

In some embodiments of the present disclosure, the predetermined field is a reserved Field R or LCID, which may be applicable to a single entry or multiple entry MAC-CE.

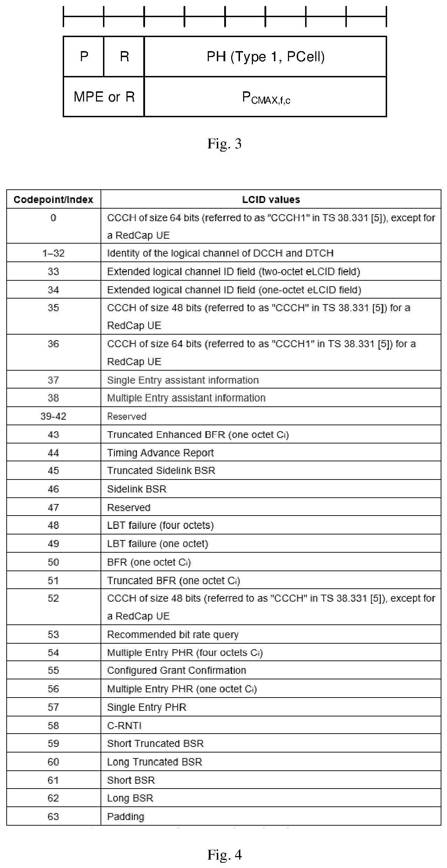

Fig. 3 is a schematic diagram of some embodiments of a first MAC-CE structure of assistant information according to the present disclosure. Fig. 3 illustrates a single entry as an example. As shown in Fig. 3, the reserved Field R may be modified to indicate whether the MAC-CE of the related art is used for PHR or reporting based on assistant information. The embodiment of Fig. 3 uses the reserved Field R to add the indication of the PHR reporting or the assistant information reporting.

In some embodiments of the present disclosure, as shown in Fig. 3, the Field R may be defined as: an indication field for distinguishing the assistant information from the PHR information. The Field R of 0 means that the Field PH in the MAC-CE is used for PHR indication (i.e., for a waveform before switching), and the Field R of 1 means that the Field PH in the MAC-CE is used for assistant information indication (i.e., for a waveform after switching).

Fig. 4 is a diagram of an MAC-CE entry defining a new LCID table for distinguishing assistant information in some embodiments of the present disclosure. As shown in Fig. 4, in the UE assistant information reporting triggered based on the MAC-CE, in the case where the MAC-CE structure of the related art is used, the LCID of the MAC-CE may be modified to indicate whether the existing MAC-CE is used for PHR or reporting based on the assistant information.

In some embodiments of the present disclosure, as shown in Fig. 4, a new LCID (new MAC subheader with LCID) is used to report the assistant information specifically.

In some embodiments of the present disclosure, as shown in Fig. 4, 37 and 38 of the LCID table are defined as LCIDs of the assistant information, and the MAC-CE using the two LCIDs is considered as assistant information MAC-CE.

### Second MAC-CE entry:

In some embodiments of the present disclosure, the reporting the assistant information by adopting an MAC-CE entry may comprise: reporting the assistant information by adopting a second MAC-CE entry, wherein the second MAC-CE entry is a new MAC-CE entry, and the second MAC-CE entry is applicable to a single entry or multiple entry MAC-CE.

In some embodiments of the present disclosure, single entry and multiple entry only distinguish multiple carriers (cells) or not, but do not distinguish the capability to carry assistant information. For the single entry, the Field R is not used to indicate a real PHR or a reference PHR, but a line is added directly below the MAC-CE entry, which is a report of the assistant information.

Therefore, the scheme that the first MAC-CE entry, the second MAC-CE entry or the third MAC-CE entry is adopted to report the assistant information in the present disclosure is applicable to the single entry MAC-CE or multiple entry MAC-CE.

In some embodiments of the present disclosure, the reporting the assistant information by adopting a second MAC-CE entry, comprises: adding an entry size and extending an indication field based on the first MAC-CE entry, and taking a new MAC-CE entry as a second MAC-CE entry; and reporting the assistant information by adopting the second MAC-CE entry.

In some embodiments of the present disclosure, the step of adding an entry size may comprise: adding an assistant information entry.

In some embodiments of the present disclosure, the step of extending an indication field may comprise: extending a first indication field, wherein the first indication field is used to indicate whether there is the reporting of the assistant information in each serving cell.

In some embodiments of the present disclosure, the step of extending an indication field may comprise: adding a second indication field, wherein the second indication field is used to indicate the reporting of reference assistant information or real assistant information.

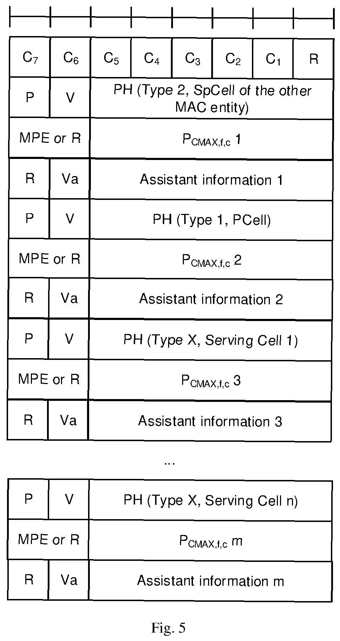

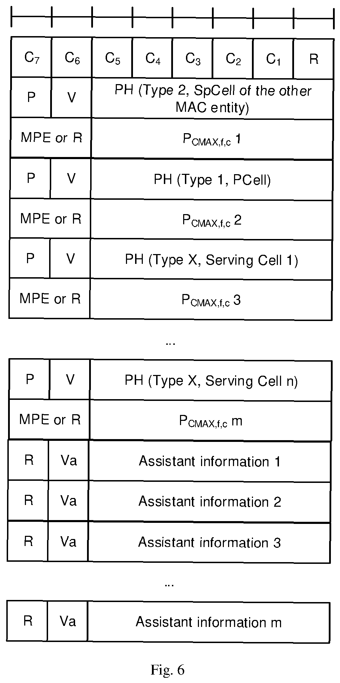

In some embodiments of the present disclosure, as shown in Figs. 5 and 6, the step of extending a first indication field may comprise: extending an indication field Ci as the first indication field, wherein the indication field Ci is used to indicate whether the each serving cell simultaneously reports the assistant information and the PHR information.

Fig. 5 is a schematic diagram of some embodiments of a second MAC-CE structure of assistant information according to the present disclosure. As shown in Fig. 5, in the UE assistant information reporting that is triggered based on the MAC-CE, in the case where a new MAC-CE structure is used, the indication field may be extended or added, a new assist information MAC-CE entry may be added, and the assistant information may be reported in the same Ci indication manner as in the PHR reporting, and Va is used to indicate reporting of reference assistant information and actual assistant information.

Fig. 6 is a schematic diagram of other embodiments of a second MAC-CE structure of assistant information according to the present disclosure. As shown in Fig. 5 and Fig. 6, an assistant information field and a field indicating whether the assistant information is reference or actual are added to the original MAC-CE entry, and the Field R is a reserved bit. The assistant information may be respectively placed behind the power information of each carrier (as shown in Fig. 5), or all the assistant information structures may be placed at the back (as shown in Fig. 6), and both schemes in the embodiments of Fig. 5 and Fig. 6 indicate the assistant information reported on different carriers through Ci. The same carrier indication Ci is used in the embodiments of Fig. 5 and Fig. 6.

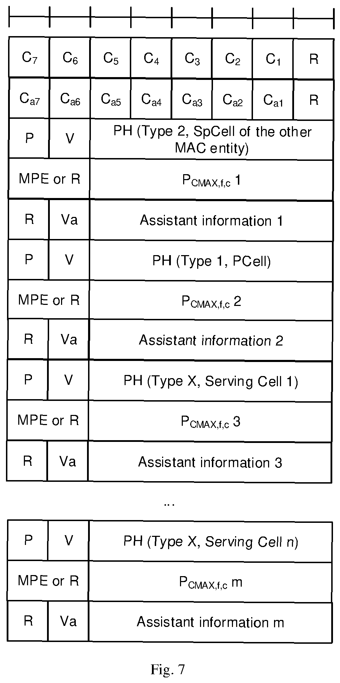

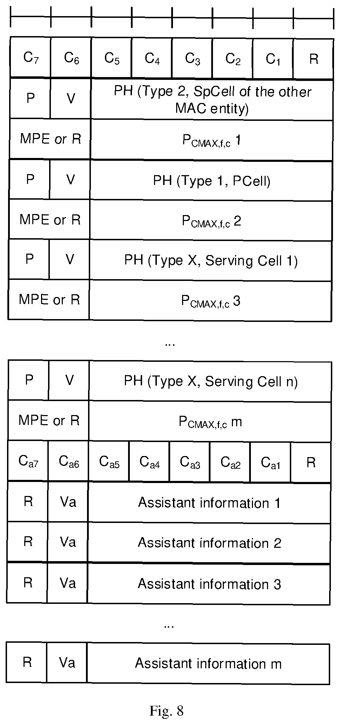

In some embodiments of the present disclosure, as shown in Fig. 7 and Fig. 8, the step of extending a first indication field may comprise: adding an indication field as the first indication field, wherein the newly added indication field is used to indicate whether the each serving cell reports the assistant information.

In some embodiments of the present disclosure, the newly added indication field may be an indication field Cai.

Fig. 7 is a schematic diagram of still other embodiments of a second MAC-CE structure of assistant information according to the present disclosure. Fig. 8 is a schematic diagram of still other embodiments of a second MAC-CE structure of assistant information according to the present disclosure. As shown in Figs. 7 and 8, in the UE assistant information reporting that is triggered based on the MAC-CE, in the case where a new MAC-CE structure is used, the indication field may be extended, an assistant information entry may be added, and a Cai different from PHR may be used to specially report the assistant information, and Va is used to indicate reporting of reference and actual assistant information. In the embodiments of Figs. 7 and 8, respective carrier indications are used, the PHR reporting is indicated by Ci, and the assistant information reporting is indicated by Cai.

In some embodiments of the present disclosure, as shown in Fig. 7 and Fig. 8, an assistant information field and a field indicating whether the assistant information is reference or actual are added to the original MAC-CE entry, and an Field R is a reserved bit. The assistant information may be respectively placed behind the power information of each carrier (as shown in Fig. 7), or all the assistant information structures may be placed at the back (as shown in Fig. 8). Both schemes indicate the assistant information reported on different carriers through a Cai different from PHR.

In some embodiments of the present disclosure, the step of adding an entry size may comprise: respectively placing assistant information of the each serving cell behind the carrier power information of the each serving cell, as shown in Figs. 5 and 7; or, placing all the assistant information structures behind all carrier power information, as shown in Figs. 6 and 8.

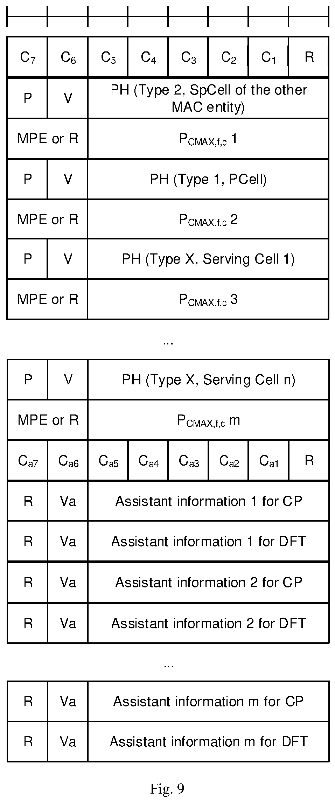

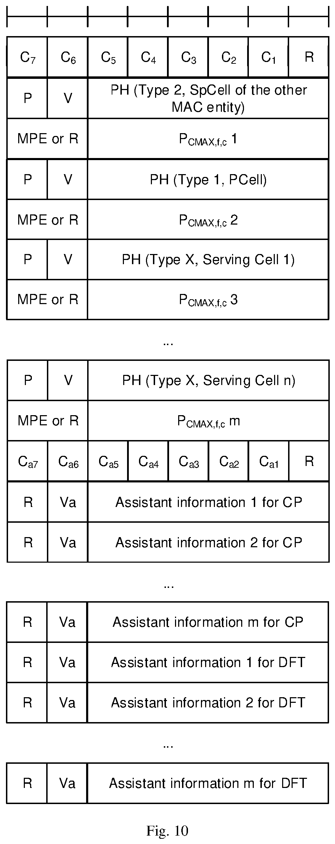

In some embodiments of the present disclosure, as shown in Fig. 9 and Fig. 10, when a carrier waveform of each serving cell comprises various waveforms, the reporting the assistant information by adopting a second MAC-CE entry may comprise: reporting assistant information of the various waveforms in a unified manner or selecting assistant information of one of the various waveforms to report.

Fig. 9 is a schematic diagram of still other embodiments of a second MAC-CE structure of assistant information according to the present disclosure. Fig. 10 is a schematic diagram of still other embodiments of a second MAC-CE structure of assistant information according to the present disclosure. In one case, each carrier may have 2 RRC-configured waveforms, and the assistant information in the case may be extended to a CP waveform for carrier 1 and a DFT waveform for carrier 1. A new MAC-CE structure (see Fig. 9 and Fig. 10) is used to report the assistant information specifically, wherein the MAC-CE comprises assistant information of different waveforms under multiple carriers, and a unified report may be made or one of them can be selected for reporting.

In some embodiments of the present disclosure, as shown in Fig. 9 and Fig. 10, assistant information indications of different waveforms are added to the original MAC-CE entry, and an Field R may be still reserved, so that the assistant information of all waveforms can be reported as a whole. The Field R may also be used to indicate whether to report the assistant information of the DFT waveform or the CP waveform, so that a 1bit indication information field is required.

The embodiments of Fig. 9 and Fig. 10 of the present disclosure are described merely by taking the structure of the embodiment of Fig. 8 of the present disclosure as an example, but it is conceivable that the embodiments of Fig. 9 and Fig. 10 of the present disclosure can also be implemented based on the structure of the embodiment of Fig. 6 of the present disclosure, that is, the above two schemes may also be designed without independently using the assistant information carrier indication of Cai.

In some embodiments of the present disclosure, the step of respectively placing assistant information of each serving cell behind the carrier power information of the each serving cell, comprises: respectively placing the assistant information of various waveforms in the each serving cell behind the carrier power information of the each serving cell (similar to the embodiments of Figs. 5 and 7).

In some embodiments of the present disclosure, the step of placing all the assistant information behind all carrier power information, comprises: centralizing the assistant information of various waveforms in all the serving cells according to serving cell identifications, and then sequencing the assistant information, as shown in the embodiment of Fig. 9; or, centralizing the assistant information of various waveforms in all the serving cells according to waveform types, and then sequencing the assistant information, as shown in the embodiment of Fig. 10.

### Third MAC-CE entry:

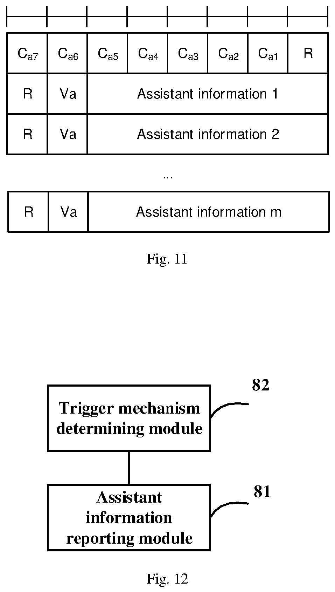

In some embodiments of the present disclosure, as shown in Fig. 11, the reporting the assistant information by adopting an MAC-CE entry may comprise: reporting the assistant information by adopting a third MAC-CE entry, wherein the third MAC-CE entry is a new MAC-CE entry, and the third MAC-CE entry is applicable to a single entry or multiple entry MAC-CE.

In some embodiments of the present disclosure, as shown in Fig. 11, the reporting the assistant information by adopting a third MAC-CE entry may comprise: reporting the assistant information by adopting the third MAC-CE entry, wherein the third MAC-CE entry is only used to report the assistant information.

Fig. 11 is a schematic diagram of some embodiments of a third MAC-CE structure of assistant information according to the present disclosure. As shown in Fig. 11, a completely new MAC-CE entry is used only to report the assistant information, without reporting information such as PHR, PCmax of the waveform before the switching.

In some embodiments of the present disclosure, as shown in Fig. 11, the MAC-CE entry cancels the information such as PCmax, PHR originally reported by PHR, and is only used to report the UE assistant information.

The present disclosure provides a reporting mechanism of the UE assistant information, comprising determination of reporting format and refinement of reporting content.

The above embodiments of the disclosure provide a triggering mode of reporting the UE assistant information based on the MAC-CE, an implementation format of reporting the UE assistant information based on the MAC-CE, and a specific implementation process of reporting and refining the UE assistant information based on the MAC-CE.

The above embodiments of the present disclosure determine the triggering mode of the assistant information, design the corresponding reporting format and method, and refine the specific implementation process of the assistant information reporting, and the embodiments of the present disclosure can effectively solve the problem that the assistant information and the PHR cannot be distinguished under the same reporting category.

According to the embodiments of the disclosure, the network equipment can determine whether to perform dynamic waveform switching according to the reference information, and can improve the uplink transmission rate in real time in the case where the network quality becomes better, or better guarantee the transmission quality in the case where the network quality is poor, so as to make the most reasonable waveform switching indication and improve the network coverage capability.

Fig. 12 is a schematic diagram of some embodiments of a user equipment according to the present disclosure. As shown in Fig. 12, the user equipment of the present disclosure may comprise an assistant information reporting module 81.

The assistant information reporting module 81 is configured to report assistant information to network equipment based on a Media Access Control-Control Element (MAC-CE), wherein the assistant information is used the assistant information is used as a reference for the network equipment to perform uplink waveform switching, and the assistant information comprises power related information.

In some embodiments of the present disclosure, the assistant information is the waveform switching assistant information; the assistant information further comprises at least one of modulation and coding scheme level information or a frequency domain resource allocation type, and the power related information further comprises at least one of Power Headroom Report (PHR) information, a maximum transmission power, a power variation, a power difference, a power value or a power compression factor.

In some embodiments of the present disclosure, the assistant information comprises at least one of the real PHR information or the reference PHR information after waveform switching.

In some embodiments of the present disclosure, the assistant information comprises at least one of the real PHR information or the reference PHR information before waveform switching.

In some embodiments of the present disclosure, the PHR information is reference PHR information of a waveform different from a current waveform after switching or without switching.

In some embodiments of the present disclosure, the assistant information reporting module 81 is configured to report the assistant information based on the MAC-CE, and trigger waveform switching behavior of the network equipment.

In some embodiments of the present disclosure, the assistant information reporting module 81 is configured to trigger reporting of the assistant information based on the MAC-CE after the waveform switching behavior.

In some embodiments of the present disclosure, as shown in Fig. 12, the user equipment of the present disclosure may further comprise a trigger mechanism determining module 82.

The trigger mechanism determining module 82 is configured to determine an assistant information trigger mechanism.

The assistant information reporting module 81 is configured to report the assistant information based on the MAC-CE according to the assistant information trigger mechanism.

In some embodiments of the present disclosure, the assistant information reporting module 81 is configured to simultaneously trigger the reporting of the assistant information and Power Headroom Report (PHR) information, according to the PHR information trigger mechanism.

In some embodiments of the present disclosure, the assistant information reporting module 81 is configured to trigger the reporting of the assistant information according to a first assistant information trigger mechanism, wherein the first assistant information trigger mechanism comprises a Power Headroom Report (PHR) information trigger mechanism and an independent assistant information trigger mechanism, and the independent assistant information trigger mechanism and the PHR information trigger mechanism are independent of each other.

In some embodiments of the present disclosure, the assistant information reporting module 81 is configured to trigger the reporting of the assistant information when the assistant information trigger mechanism is an independent assistant information trigger mechanism, wherein the independent assistant information trigger mechanism and the PHR information trigger mechanism are independent of each other.

In some embodiments of the present disclosure, the assistant information reporting module 81 may be configured to report the assistant information by adopting an MAC-CE entry, in the case where the assistant information is reported based on the Media Access Control-Control Element (MAC-CE), wherein the MAC-CE entry is a single entry MAC-CE or a multiple entry MAC-CE.

In some embodiments of the present disclosure, the MAC-CE entry may be at least one of a first MAC-CE entry, a second MAC-CE entry, or a third MAC-CE entry, wherein the first MAC-CE entry is an MAC-CE entry of the related art (legacy MAC-CE entry); the second MAC-CE entry and the third MAC-CE entry are new MAC-CE entries.

In some embodiments of the present disclosure, as shown in Fig. 3 and Fig. 4, the assistant information reporting module 81 may be configured to modify a predetermined field of the first MAC-CE entry in the case where the assistant information is reported by adopting the MAC-CE entry; use the predetermined field to indicate the first MAC-CE entry to be used for the reporting of the assistant information or PHR information; and report the assistant information by using the first MAC-CE entry.

In some embodiments of the present disclosure, the predetermined field is a reserved Field R (as shown in Fig. 3) or a logical channel identification (as shown in Fig. 4).

In some embodiments of the present disclosure, as shown in any one embodiment of Fig. 5 to Fig. 10, in the case where the assistant information is reported by adopting an MAC-CE entry, the assistant information reporting module 81 may be configured to add an entry size and extend an indication field based on the first MAC-CE entry, and take a new MAC-CE entry as a second MAC-CE entry; and report the assistant information by adopting the second MAC-CE entry.

In some embodiments of the present disclosure, the assistant information reporting module 81 may be configured to add an assistant information entry in the case where an entry size is added.

In some embodiments of the present disclosure, in the case where an indication field is extended, the assistant information reporting module 81 may be configured to extend a first indication field, wherein the first indication field is used to indicate whether there is the reporting of the assistant information in each serving cell; or add a second indication field, wherein the second indication field is used to indicate the reporting of reference assistant information or actual assistant information.

In some embodiments of the present disclosure, as shown in Fig. 5 or Fig. 6, in the case where a first indication field is extended, the assistant information reporting module 81 may be configured to extend an indication field Ci as the first indication field, wherein the indication field Ci is used to indicate whether the each serving cell simultaneously reports the assistant information and the PHR information.

In some embodiments of the present disclosure, as shown in any embodiment of Fig. 7 to Fig. 10, in the case where a first indication field is extended, the assistant information reporting module 81 may be configured to newly add an indication field as the first indication field, wherein the newly added indication field is used to indicate whether the each serving cell reports the assistant information.

In some embodiments of the present disclosure, the newly added indication field may be a Cai indication field.

In some embodiments of the present disclosure, in the case where an assistant information entry is added, the assistant information reporting module 81 may be configured to respectively place the assistant information of the each serving cell behind the carrier power information of the each serving cell (as shown in the embodiment of Fig. 5 or Fig. 7); or place all the assistant information behind all carrier power information (as shown in any embodiment of Fig.6 and Figs. 8-10).

In some embodiments of the present disclosure, in the case where a carrier waveform of each serving cell comprises various waveforms and the assistant information is reported by adopting a second MAC-CE entry, the assistant information reporting module 81 may be configured to report the assistant information of the various waveforms in a unified manner or select the assistant information of one of the various waveforms to report.

In some embodiments of the present disclosure, in the case where the assistant information of the each serving cell is respectively placed behind carrier power information of the each serving cell, the assistant information reporting module 81 may be configured to respectively place the assistant information of various waveforms in the each serving cell behind the carrier power information of the each serving cell (as shown in Fig. 5 or Fig. 7).

In some embodiments of the present disclosure, in the case where all assistant information are placed behind all carrier power information, the assistant information reporting module 81 may be configured to centralize the assistant information of various waveforms in all the serving cells according to serving cell identifications, and then sequencing the assistant information (as shown in the embodiment of Fig. 9); or, centralize the assistant information of various waveforms in all the serving cells according to waveform types, and then sequencing the assistant information (as shown in the embodiment of Fig. 10).

In some embodiments of the present disclosure, as shown in Fig. 11, in the case where the assistant information is reported by adopting an MAC-CE entry, the assistant information reporting module 81 may be configured to report the assistant information by using a third MAC-CE entry, wherein the third MAC-CE entry is only used for reporting the assistant information.

The inventors found through research that: in the case where uplink dynamic waveform switching is performed, MCS modification may be involved, FDRA types need to be changed, power controls related to two waveforms are different, and a power difference before and after switching needs to be known. Therefore, the above embodiments of the present disclosure can help the network equipment to perform dynamic switching better and ensure better coverage capability of the network by reporting the effective uplink assistant information.

The inventors found through research that: in the uplink dynamic waveform switching assistant information, reporting of the PHR and reporting of the assistant information may be involved, and the PHR is generally reporting of waveform power before switching, and the assistant information is generally a waveform power reference after switching. In order to give reasonable reporting mode and structure to the assistant information and to be distinguished from the PHR reporting to avoid confusion, both the assistant information and the PHR must use the same trigger mechanism but different reporting formats. Therefore, the above embodiments of the present disclosure design a corresponding triggering process and reporting format, so as to ensure reasonable and correct reporting of the assistant information and not to mutually affect the PHR reporting process.

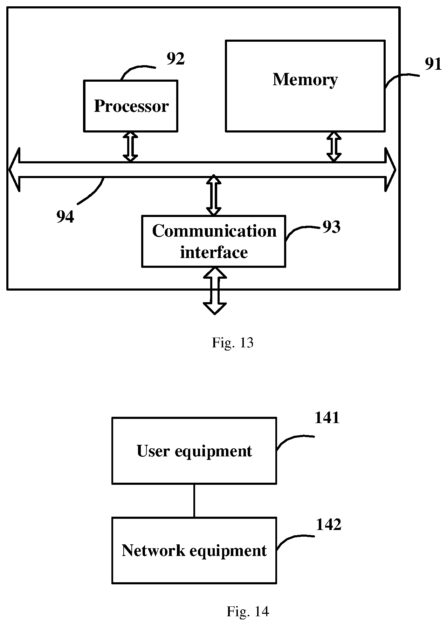

Fig. 13 is a schematic structural diagram of other embodiments of a user equipment according to the present disclosure. As shown in Fig. 13, the user equipment comprises a memory 91 and a processor 92.

The memory 91 is configured to store instructions, the processor 92 is coupled to the memory 91, and the processor 92 is configured to implement the assistant information reporting method according to the above embodiment (for example, any embodiment of Fig. 1 to Fig. 11) based on the instructions stored in the memory.

As shown in Fig. 13, the user equipment further comprises a communication interface 93 for information interaction with other devices. Meanwhile, the user equipment further comprises a bus 94, and the processor 92, the communication interface 93, and the memory 91 are in communication with each other through the bus 94.

The memory 91 may comprise a high-speed RAM memory, and may also comprise a non-volatile memory, such as at least one disk memory. The memory 91 may also be a memory array. The memory 91 may also be partitioned into blocks, and the blocks may be combined into virtual volumes according to certain rules.

Further, the processor 92 may be a central processing unit CPU, or may be an application specific integrated circuit ASIC, or one or more integrated circuits configured to implement the embodiments of the present disclosure.

In a scene with limited coverage, by using the assistant information reporting method designed by the present disclosure, the coverage performance is improved and the coverage capability of a high-frequency network can be effectively improved.

The above embodiments of the present disclosure can improve the uplink coverage capability and improve the network coverage capability of an operator.

Fig. 14 is a schematic structural diagram of some embodiments of an assistant information reporting system according to the present disclosure. As shown in Fig. 14, the assistant information reporting system of the present disclosure may comprise a user equipment 141 and network equipment 142.

The user equipment 141 is configured to report assistant information to the network equipment based on a Media Access Control-Control Element (MAC-CE), wherein the assistant information comprises power related information, and the user equipment is the user equipment according to any of the above embodiments (for example, the embodiment of Fig. 12 or Fig. 13).

The network equipment 142 is configured to schedule uplink waveform switching according to the assistant information.

The user equipment of the present disclosure can report the assistant information of the user equipment to the network equipment in real time, so that the network equipment can correctly schedule the waveform of the PUSCH, thereby ensuring the uplink transmission performance and improving the network coverage capability.

According to another aspect of the present disclosure, there is provided a computer-readable storage medium, wherein the computer-readable storage medium stores computer instructions which when executed by a processor, implement the assistant information reporting method according to any of the above embodiments (for example, any embodiment of Fig. 1 to Fig. 11).

In some embodiments of the present disclosure, the computer-readable storage medium may be a non-transitory computer-readable storage medium.

As will be appreciated by one of skill in the art, the embodiments of the present disclosure may be provided as a method, apparatus, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more computer-usable non-transitory storage media (comprising, but not limited to, disk storage, CD-ROM, optical storage, and so forth) having computer-usable program code embodied therein.

The present disclosure is described with reference to flow diagrams and/or block diagrams of the methods, apparatus (systems) and computer program products according to the embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, special purpose computer, embedded processor, or other programmable data processing apparatuses to produce a machine, such that the instructions, which are executed by the processor of the computer or other programmable data processing apparatuses, create means for implementing the functions specified in one or more flows in the flow diagram and/or one or more blocks in the block diagram.

These computer program instructions may also be stored in a computer-readable memory that can direct a computer or other programmable data processing apparatuses to function in a particular manner, such that the instructions stored in the computer-readable memory produce an article of manufacture comprising instruction means which implement the functions specified in one or more flows in the flow diagram and/or one or more blocks in the block diagram.

These computer program instructions may also be loaded onto a computer or other programmable data processing apparatuses, to cause a series of operational steps to be performed on the computer or other programmable apparatuses to produce a computer implemented process, such that the instructions which are executed on the computer or other programmable apparatuses provide steps for implementing the functions specified in one or more flows in the flow diagram and/or one or more blocks in the block diagram.

The user equipment, the trigger mechanism determining module and the assistant information reporting module described above may be implemented as a general-purpose processor, a Programmable Logic Controller (PLC), a Digital Signal Processor (DSP), an Application Specific Integrated Circuit (ASIC), a Field Programmable Gate Array (FPGA) or other programmable logic device, a discrete gate or transistor logic device, a discrete hardware component, or any suitable combination thereof, for performing the functions described herein.

Thus far, the present disclosure has been described in detail. Some details well known in the art have not been described in order to avoid obscuring the concepts of the present disclosure. Those skilled in the art can now fully appreciate how to implement the technical solutions disclosed herein, in view of the foregoing description.

It will be understood by those skilled in the art that all or part of the steps for implementing the above embodiments may be implemented by hardware, or may be implemented by a program instructing relevant hardware to implement the steps. The program may be stored in a non-transitory computer-readable storage medium, and the storage medium may be a read only memory, a magnetic disk, a compact disc or the like.

The description of the present disclosure has been presented for purposes of illustration and description, and is not intended to be exhaustive or limited to the disclosure in the form disclosed. Many modifications and variations will be apparent to those skilled in this art. The embodiments are chosen and described in order to best explain the principles of the present disclosure and practical applications, and to enable those skill in the art to understand the present disclosure and design various embodiments with various modifications suited to a particular use.

## Claims

1. An assistant information reporting method, comprising:
reporting assistant information to network equipment based on a Media Access Control-Control Element (MAC-CE), wherein the assistant information is used as a reference for the network equipment to perform uplink waveform switching, and the assistant information comprises power related information.

2. The assistant information reporting method according to claim 1, wherein the reporting assistant information to network equipment based on a Media Access Control-Control Element (MAC-CE), comprises:
determining an assistant information trigger mechanism; and
reporting the assistant information based on the MAC-CE according to the assistant information trigger mechanism.

3. The assistant information reporting method according to claim 2, wherein the reporting the assistant information based on the MAC-CE according to the assistant information trigger mechanism, comprises:
simultaneously triggering reporting of the assistant information and Power Headroom Report (PHR) information, according to a PHR information trigger mechanism.

4. The assistant information reporting method according to claim 2, wherein the reporting the assistant information based on the MAC-CE according to the assistant information trigger mechanism, comprises:
triggering the reporting of the assistant information according to a first assistant information trigger mechanism, wherein the first assistant information trigger mechanism comprises a Power Headroom Report (PHR) information trigger mechanism and an independent assistant information trigger mechanism, and the independent assistant information trigger mechanism and the PHR information trigger mechanism are independent of each other.

5. The assistant information reporting method according to claim 2, wherein the reporting the assistant information based on the MAC-CE according to the assistant information trigger mechanism, comprises:
triggering the reporting of the assistant information according to an independent assistant information trigger mechanism, wherein the independent assistant information trigger mechanism and a Power Headroom Report (PHR) information trigger mechanism are independent of each other.

6. The assistant information reporting method according to any one of claims 1 to 5, wherein the reporting assistant information to network equipment based on a Media Access Control-Control Element (MAC-CE), comprises:
reporting the assistant information by adopting an MAC-CE entry, wherein the MAC-CE entry is a single entry MAC-CE or a multiple entry MAC-CE.

7. The assistant information reporting method according to claim 6, wherein the reporting the assistant information by adopting an MAC-CE entry, comprises:
modifying a predetermined field of a first MAC-CE entry;
using the predetermined field to indicate the first MAC-CE entry to be used for the reporting of the assistant information or Power Headroom Report (PHR) information; and
reporting the assistant information by using the first MAC-CE entry.

8. The assistant information reporting method according to claim 7, wherein the predetermined field is a reserved Field R or a logical channel identification.

9. The assistant information reporting method according to claim 6 or 7, wherein the reporting the assistant information by using an MAC-CE entry, comprises:
adding an entry size and extending an indication field based on the first MAC-CE entry, and taking a new MAC-CE entry as a second MAC-CE entry; and
reporting the assistant information by adopting the second MAC-CE entry.

10. The assistant information reporting method according to claim 9, wherein the extending an indication field comprises:
extending a first indication field, wherein the first indication field is used to indicate whether there is a reporting of the assistant information in each serving cell; or
adding a second indication field, wherein the second indication field is used to indicate a reporting of reference assistant information or actual assistant information.

11. The assistant information reporting method according to claim 10, wherein the extending a first indication field comprises:
extending an indication field Ci as the first indication field, wherein the indication field Ci is used to indicate whether the each serving cell simultaneously reports the assistant information and Power Headroom Report (PHR) information; or
adding an indication field as the first indication field, wherein the newly added indication field is used to indicate whether the each serving cell reports the assistant information.

12. The assistant information reporting method according to any one of claims 9 to 11, wherein the adding an entry size comprises: respectively placing the assistant information of the each serving cell behind carrier power information of the each serving cell; or
placing all the assistant information behind all carrier power information.

13. The assistant information reporting method according to any one of claims 9 to 12, wherein in a case where a carrier waveform of each serving cell comprises various waveforms, the reporting the assistant information by adopting a second MAC-CE entry, comprises:
reporting the assistant information of the various waveforms in a unified manner or selecting the assistant information of one of the various waveforms to report.

14. The assistant information reporting method according to claim 12 or 13, wherein:
the respectively placing the assistant information of the each serving cell behind carrier power information of the each serving cell, comprises: respectively placing the assistant information of various waveforms in the each serving cell behind the carrier power information of the each serving cell; and
the placing all the assistant information behind all carrier power information, comprises: centralizing the assistant information of various waveforms in all serving cells according to serving cell identifications, and then sequencing the assistant information; or, centralizing the assistant information of various waveforms in all the serving cells according to waveform types, and then sequencing the assistant information.

15. The assistant information reporting method according to any one of claims 6 to 14, wherein the reporting the assistant information by adopting an MAC-CE entry, comprises:
reporting the assistant information by adopting a third MAC-CE entry, wherein the third MAC-CE entry is only used to report the assistant information.

16. The assistant information reporting method according to any one of claims 1 to 15, wherein the assistant information is waveform switching assistant information; the assistant information further comprises at least one of modulation and coding scheme level information or a frequency domain resource allocation type, and the power related information further comprises at least one of Power Headroom Report (PHR) information, a maximum transmission power, a power variation, a power difference, a power value or a power compression factor.

17. The assistant information reporting method according to claim 16, wherein:
the assistant information comprises at least one of real PHR information or reference PHR information after waveform switching; or
the assistant information comprises at least one of real PHR information or reference PHR information before waveform switching.

18. The assistant information reporting method according to any one of claims 1 to 17, wherein the reporting assistant information to network equipment based on a Media Access Control-Control Element (MAC-CE), comprises:
reporting the assistant information based on the MAC-CE, and triggering a waveform switching behavior on the network equipment; or
triggering the reporting of the assistant information based on the MAC-CE after the waveform switching behavior.

19. A user equipment, comprising:
an assistant information reporting module, configured to report assistant information to network equipment based on a Media Access Control-Control Element (MAC-CE), wherein the assistant information is used the assistant information is used as a reference for the network equipment to perform uplink waveform switching, and the assistant information comprises power related information.

20. A user equipment, comprising:
a memory configured to store instructions; and
a processor configured to execute the instructions, to cause the user equipment to implement the assistant information reporting method according to any one of claims 1 to 18.

21. An assistant information reporting system, comprising:
a user equipment configured to report assistant information to network equipment based on a Media Access Control-Control Element (MAC-CE), wherein the assistant information comprises power related information, and the user equipment is the user equipment according to claim 19 or 20; and
the network equipment configured to schedule uplink waveform switching according to the assistant information.

22. A computer-readable storage medium, wherein the computer-readable storage medium stores computer instructions which when executed by a processor, implement the assistant information reporting method according to any one of claims 1 to 18.

23. A computer program, comprising:
instructions which when executed by a processor, cause the processor to perform the assistant information reporting method according to any one of claims 1 to 18.
